# DEMANDE DE BREVET EUROPEEN

(11) **EP 1 708 055 A2**
(43) Date de publication de la demande: **04.10.2006**
(21) Numéro de dépôt: 06007026.5
(22) Date de dépôt: 03.04.2006
(51) Int. Cl.: G05B 17/02, G05B 23/02

(54) **Procédé et équipement de développement d'un système de diagnostic de fonctionnement de véhicule**

(30) Priorité: 01.04.2005 FR 0550865
(71) Demandeur: Johnson Controls Technology Company, Holland, MI 49423 (US)
(72) Inventeur: Drewery, Cyril, 95540 Mery Sur Oise (FR)
(74) Mandataire: Bloch, Gérard

(57) **Abrégé**

Procédé et équipement de développement d'un système (100) de diagnostic du fonctionnement d'un véhicule (2), le système (100) ayant une partie (10) embarquée et une partie (12) en poste fixe. Les deux parties échangent des données de diagnostic au moyen de trames (T) de données de diagnostic.

On modélise le véhicule,
on simule des dysfonctionnements d'organes du véhicule (2) et les comportements C(P,D) subséquents du véhicule (2) à partir d'un modèle virtuel (M) décrivant le fonctionnement nominal et le fonctionnement défaillant (D) du véhicule pour obtenir des données de simulation,
on calcule (107) les trames (T) de données de diagnostic à partir des données de simulation,
on entre les trames de diagnostic (T) dans la partie fixe (12) du système (100) et
on compare (109) les états de sortie de ladite partie fixe (12) aux dysfonctionnements (D) simulés pour valider le développement.

## Description

L'invention concerne tout d'abord un procédé de développement d'un système de diagnostic de fonctionnement de véhicules automobiles et, plus généralement, de véhicules de transport, notamment aussi par air et par rail.

Les systèmes de diagnostic ici considérés sont du type de ceux utilisés par les garagistes, d'aide au dépannage des véhicules automobiles. Ils comportent généralement des calculateurs ou ordinateurs temps réel, organisés en deux parties, une en poste fixe, chez le garagiste, et une autre, embarquée, sur le véhicule.

Le calculateur fixe peut, chez le garagiste, être connecté sur le calculateur embarqué, récupérer les données du calculateur embarqué sous forme d'une trame de données, en extraire et exploiter des données de fonctionnement pour établir le diagnostic.

Le calculateur embarqué collecte, mémorise et rafraîchit en temps réel des données de fonctionnement du véhicule lors de son utilisation (défauts mémorisés, paramètres de fonctionnement...).

La validation et l'évaluation des performances du système de diagnostic, plus généralement son développement, sont actuellement effectués lors des essais de fonctionnement d'un prototype du véhicule avant le lancement de sa fabrication en série.

Le procédé de validation consiste soit à injecter des pannes dans le prototype alors connecté au calculateur fixe, soit à coder manuellement des trames correspondant à des configurations de pannes, directement injectées dans le calculateur fixe du système de diagnostic, et à vérifier que les diagnostics proposés par ce dernier sont corrects.

C'est un procédé qui peut se révéler coûteux, notamment si la stratégie de diagnostic n'est pas bonne ou si ses performances s'avèrent insuffisantes, notamment pour des raisons mettant en cause la conception du véhicule, et par suite la fabrication du prototype. En d'autres termes, les éventuelles modifications consécutives à ces tests de diagnostic ne peuvent être que minimes, en raison du stade avancé des développements.

Pour remédier à ces difficultés, la demanderesse propose tout d'abord un procédé pour développer un système de diagnostic avant la fabrication de tout prototype.

A cet effet, l'invention concerne tout d'abord un procédé de développement d'un système de diagnostic du fonctionnement d'un véhicule, le système devant comporter une partie embarquée dans le véhicule et une partie en poste fixe, la partie embarquée étant destinée à transmettre des données de diagnostic à la partie fixe au moyen de trames de données de diagnostic, et le fonctionnement nominal et le fonctionnement défaillant du véhicule étant décrits par un modèle virtuel mathématique, le procédé étant caractérisé par le fait que :
- on modélise le véhicule,
- on simule des dysfonctionnements d'organes du véhicule et les comportements subséquents du véhicule à partir du modèle virtuel pour obtenir des données de simulation,
- on calcule les trames de données de diagnostic à partir des données de simulation,
- on entre les trames de diagnostic dans la partie fixe du système et
- on compare les états de sortie de ladite partie fixe aux dysfonctionnements simulés pour valider le développement.

La partie embarquée du système de diagnostic étant entièrement modélisée, on peut valider le développement du système de diagnostic avant la construction du prototype, ce qui évite les coûts supplémentaires qu'entraînerait la construction d'un nouveau prototype ou 1a modification ultérieure de sa conception.

Du fait de l'enchaînement des étapes du procédé de l'invention, toute erreur de codage des trames de données de diagnostic n'est plus à redouter.

De préférence, on organise le modèle virtuel mathématique en un ensemble de fonctions de transfert caractéristiques du fonctionnement nominal et des dysfonctionnements des organes du véhicule à diagnostiquer et on simule le fonctionnement dudit véhicule et des dysfonctionnements d'au moins un de ses organes en substituant des fonctions de transfert caractéristiques d'un fonctionnement défaillant à des fonctions de transfert caractéristiques d'un fonctionnement nominal.

L'invention concerne également un équipement de développement d'un système de diagnostic de véhicule pour mettre en oeuvre le procédé de la présente demande, caractérisé par le fait qu'il comporte
- un outil de test informatique sur lequel on modélise le véhicule, comportant le modèle virtuel mathématique du véhicule et la partie embarquée du système de diagnostic et des moyens d'acquisition de données de dysfonctionnement d'organes du véhicule, pour simuler et calculer des trames de données de diagnostic,
- un outil de diagnostic informatique comprenant des moyens applicatifs de diagnostic pour recevoir les trames de données de diagnostic simulées,
- une interface de l'outil de test pour la liaison entre les deux outils de test et de diagnostic et pour entrer les trames de données de diagnostic dans les moyens applicatifs de l'outil de diagnostic.

Les moyens d'acquisition de données de l'outil de test assurent une fonction équivalente de celle des bus de données de diagnostic des véhicules, l'outil de test, qui est un simulateur, permettant de simuler la messagerie des calculateurs du véhicule.

Dans une première forme de réalisation de l'équipement, l'outil de test est un premier ordinateur, avec un périphérique d'acquisition et un pilote de communication, l'outil de diagnostic est un deuxième ordinateur comportant des moyens applicatifs de diagnostic et l'interface de l'outil de test est une interface matérielle.

L'outil de diagnostic peut d'ailleurs être l'outil de diagnostic final prêt pour une utilisation chez un garagiste.

Dans une autre forme de réalisation de l'équipement de la présente demande, les deux outils de test et de diagnostic sont implantés sur un même ordinateur et l'interface est une interface de moyens logiciels reliés aux moyens applicatifs de diagnostic de l'outil de diagnostic.

L'invention sera mieux comprise à l'aide de la description suivante du procédé et de l'équipement de développement de l'invention, en référence au dessin annexé, sur lequel :
- la figure 1 est un schéma général par blocs fonctionnels d'un système de diagnostic de véhicule automobile de l'art antérieur ;
- la figure 2 est un schéma par blocs fonctionnels de l'équipement de développement d'un système de diagnostic de véhicule automobile mettant en oeuvre le procédé de développement de l'invention et
- la figure 3 est un organigramme fonctionnel du procédé de développement de l'invention.

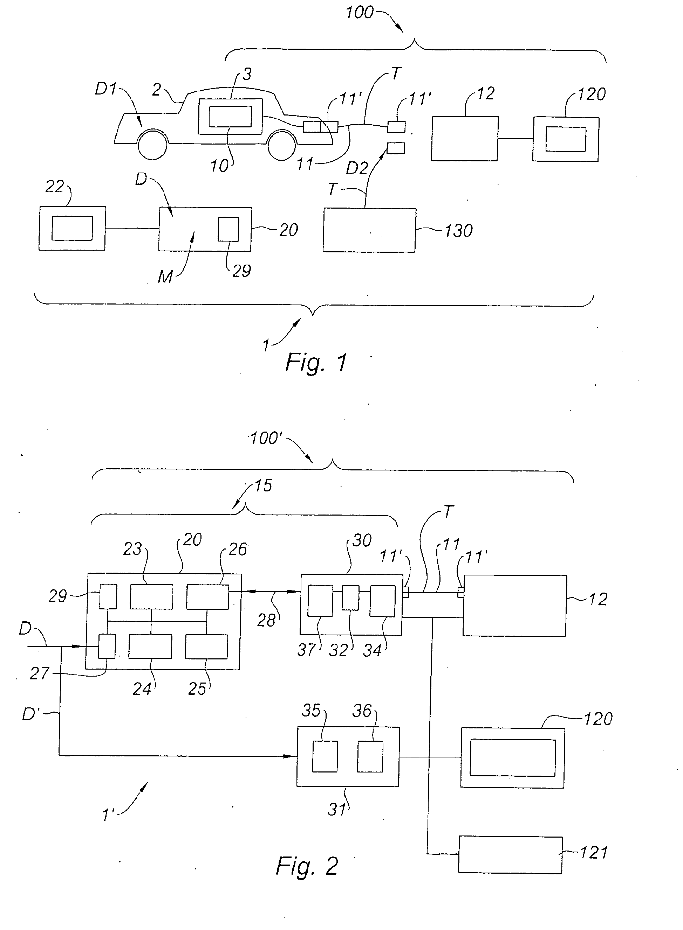

En référence à la figure 1, un système classique 100 de diagnostic de véhicule 2 automobile comporte une partie embarquée 10 et une partie en poste fixe 12 reliée à un moniteur 120 et un pupitre 130, les deux parties étant connectées entre elles par une interface matérielle constituée d'un cordon de test 11, des prises électriques 11' sur le véhicule 2 et 11" sur la partie fixe 12.

A la place d'une liaison filaire, on peut aussi avoir une liaison radio, une liaison logicielle sur un bus informatique, etc.

D'ordinaire, un équipement de développement 1 du système de diagnostic 100 ci-dessus nécessite un prototype 2 du véhicule automobile avec l'ensemble de ses calculateurs électroniques de bord 3 équipé de la partie embarquée 10 du système de diagnostic 100, désignée ci-après sous l'appellation de calculateur embarqué 10. Ce calculateur embarqué élabore et émet des trames T de données de diagnostic.

L'ensemble des calculateurs 3 est relié à l'outil 12 de diagnostic informatique au moyen de la liaison 11 par laquelle il reçoit les trames T de données de diagnostic. On désignera par la suite cet outil de diagnostic 12 par calculateur débarqué.

Le calculateur débarqué 12 est par ailleurs relié à deux périphériques, le moniteur 120 et l'interface 130 servant à la fois de pupitre de contrôle - commande et d'introduction de trames de données du type de celles T transmises par la liaison 11. Il contrôle et exécute des logiciels applicatifs de diagnostic LA dont il est chargé, quand il reçoit une trame T.

On peut utiliser par ailleurs les données de simulation d'un ordinateur 20 comportant un simulateur 29 du comportement du véhicule à partir d'un modèle virtuel mathématique M modélisant les fonctions assurées par les différents organes du véhicule, préalablement mémorisé dans l'ordinateur 20 (dans une mémoire non représentée). Pour visualiser ces données de simulation, l'ordinateur 20 est relié à un moniteur 22.

Quand, à l'aide du pupitre (non représenté) de l'ordinateur 20, on introduit des paramètres P d'utilisation normale du véhicule (trajectoires, vitesses, accélérations, etc.) et des défauts D de fonctionnement (défauts de température, défauts électriques, etc., le simulateur 29 calcule le comportement C(P,D) correspondant du véhicule 2 et en visualise les états de sortie sur le moniteur 22.

Alors, le procédé de test classique consiste :
- soit à provoquer des pannes D1 dans le prototype 2 du véhicule connecté au calculateur 12,
- soit à coder et à introduire manuellement des trames T correspondant à des pannes D2 et au comportement C(P,D2) dans le calculateur fixe 12 du système de diagnostic 100 par le canal de l'interface 130,
- à vérifier que les diagnostics D'1 ou D'2 visualisés sur le moniteur 120 correspondent aux défauts D1 ou D2, puis à vérifier que les comportements C(P,D1 ou D2) ci-dessus correspondent à ceux C(P, D) simulés dans l'ordinateur 20 par le simulateur 29 et visualisés sur le moniteur 22.

Pour le test concernant un même défaut D, on peut donc obtenir deux diagnostics soit identiques D', soit différents D'1, D'2, si par erreur D1 ou D2, correspondant à T, sont différents de D.

En définitive, on comprendra que l'équipement classique de développement 1 permet surtout de tester et de valider le prototype du véhicule.

Ici, conformément à l'invention de la présente demande, on propose, en référence à la figure 2, un équipement 1' de développement du système de diagnostic 100 dans lequel on n'utilise pas de prototype de véhicule 2.

Le prototype 2 est remplacé par un outil de test informatique 15 composé de l'ordinateur 20 ci-dessus, avec le modèle virtuel mathématique M du prototype, d'un simulateur 30 des calculateurs embarqués 10 ci-dessus.

L'ordinateur 20, dont on précisera la structure plus loin, simule le véhicule 2 et transmet ses états de sortie de sa simulation caractéristiques du comportement C(P, D) du véhicule, au simulateur 30 qui, lui, simule le calculateur embarqué 10 ci-dessus.

Le simulateur 30 calcule des données de diagnostic à partir des états de sortie C(P, D) de l'ordinateur 20 grâce à une liaison 28, calcule des trames T de données de diagnostic et simule la messagerie du calculateur embarqué 10 ci-dessus selon le protocole conforme à la messagerie des calculateurs de véhicule, conforme par exemple au protocole CAN ou KWP 2000, pour alimenter le calculateur débarqué 12.

Pour cela, le simulateur 30 comporte une prise 11' de données de diagnostic, sur laquelle sont disponibles les trames T calculées, de sorte qu'on peut directement y connecter le calculateur débarqué 12 du système de diagnostic 100 ci-dessus grâce à la liaison filaire 11.

L'outil de test 15 et l'outil de diagnostic informatique 12 constituent ainsi un véritable équipement 100' de développement du système de diagnostic 100.

De plus, les opérations manuelles de codage de la trame T ci-dessus évoquées sur l'interface 130 ne sont plus nécessaires.

Bien qu'effectuant des tâches similaires à celles du calculateur embarqué 10, le simulateur 30 est différent :
- le simulateur 30 est un calculateur ordinaire d'usage général, peu coûteux, entièrement programmé (software) et dont on peut faire évoluer facilement les programmes de simulation et il est organisé en fonction de ce caractère évolutif,
- le calculateur embarqué 10 est un calculateur nécessairement très intégré puisque définitif, possédant des fonctions câblées (firmware, voire hardware), difficile, voire impossible à faire évoluer, coûteux, et organisé pour être performant dans un environnement temps réel.

L'ordinateur 20 comporte un module 27 d'acquisition de données et paramètres de simulation, par exemple un clavier d'ordinateur, un simulateur 29 pour simuler le fonctionnement du véhicule à partir du modèle virtuel mathématique M, mémorisé dans une mémoire 25, et constitué de fonctions de transfert extraites de mémoires 23 et 24 évoquées ci-après, et une interface 26 de connexion au calculateur simulateur 30.

Le modèle virtuel mathématique M est plus précisément constitué de fonctions de transfert caractéristiques des fonctions des différents organes du véhicule en fonctionnement nominal, dans la mémoire 23, et en dysfonctionnement, dans la mémoire 24.

Le simulateur 30 comporte plus précisément un module 37 d'acquisition des données présentes sur la liaison 28 qui peut être un pilote de communication (ou driver), un module 32 de simulation du calculateur 10 et un module 34 de calcul de trames T de données de diagnostic et de messagerie sur la liaison 11. Le module 34 comporte en outre un driver de messagerie (ou pilote, non représenté) identique à celui du calculateur embarqué 10 pour simuler la messagerie des calculateurs embarqués du véhicule sur la liaison 11.

Le calculateur débarqué 12 reçoit les trames T, par un driver (non représenté) connecté sur la liaison 11 et normalement compatible au driver précédent, et contrôle l'exécution des logiciels applicatifs de diagnostic LA qu'il contient pour délivrer, sur le moniteur 120, les diagnostics correspondant à chaque trame reçue.

Les logiciels applicatifs LA peuvent être ceux du système 100 vu plus haut.

Il est possible, mais non indispensable, d'introduire un calculateur superviseur 31 d'exploitation de l'équipement 100', bouclant les états de sortie des calculateurs 30 et 12 sur l'ordinateur 20, ce qui permet de balayer successivement tous les dysfonctionnements D possibles et d'élaborer puis d'enregistrer les résultats des tests.

Pour cela, le calculateur 31 comporte un module 35 de comparaison du diagnostic transmis par le calculateur 12 et du dysfonctionnement D en cours transmis par l'ordinateur 20, et un module 36 de lancement d'un nouveau dysfonctionnement D' vers l'ordinateur 20.

Le calculateur 31 peut alors éditer ses résultats en utilisant le moniteur 120 ou tout autre périphérique de sortie de résultats tels qu'une imprimante 121.

Pour identifier les causes des échecs ou les erreurs de méthode de diagnostic du système de diagnostic 100, il peut être judicieux d'utiliser un algorithme du type Analyse de Mode des Défaillances Et de leurs Conséquences (AMDEC).

L'utilisation de l'équipement va maintenant être exposé.

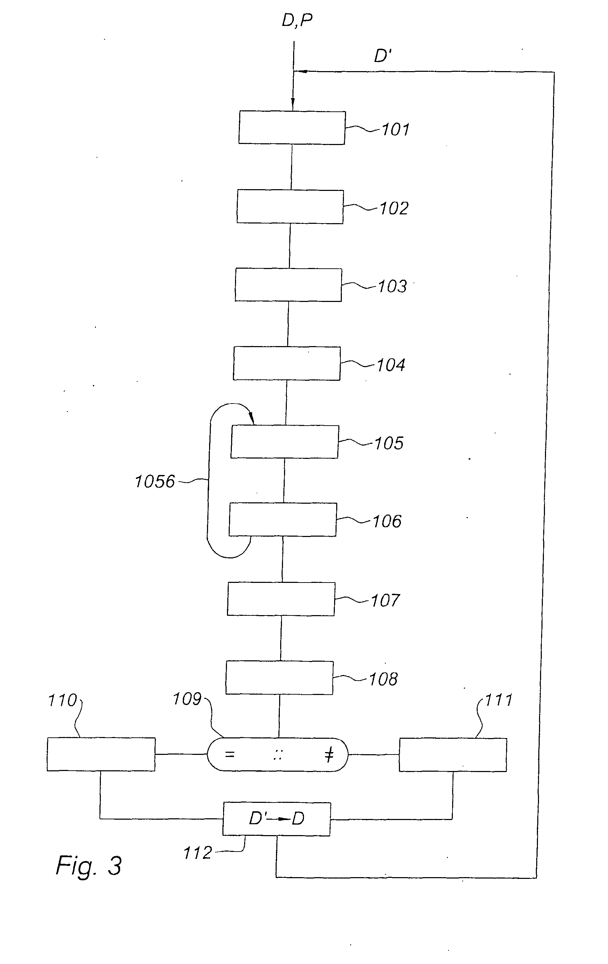

En référence à la figure 3, l'équipement de développement 1' permet à un opérateur de valider le système de diagnostic 100 en testant le système de diagnostic 100' avant la construction du prototype 2. On procède comme suit.

Après avoir introduit un dysfonctionnement D dans l'ordinateur 20 :
- lors d'une première étape 101 d'initialisation d'utilisation, grâce au module 27, l'opérateur met l'ordinateur 20 dans un état initial de simulation du véhicule, introduisant notamment les paramètres P d'utilisation du véhicule.
- A une étape 102 de constitution du jeu d'essai, grâce au module 27, l'opérateur transfère dans la mémoire 25 de l'ordinateur 20 toutes les fonctions de transfert du véhicule utiles au test du diagnostic en cas de dysfonctionnement D et notamment y substitue la fonction de transfert de l'organe à l'origine du dysfonctionnement D (mémorisée dans la mémoire 24) à la fonction de transfert de bon fonctionnement du même organe.
- A une étape de lancement 103, l'opérateur lance le simulateur 29 de l'ordinateur 20, lequel simule le comportement C(P,D) du véhicule, en utilisant toutes les fonctions de transfert mémorisées dans la mémoire 25 et,
- simultanément, lors d'une étape 104, le simulateur 29 transmet les paramètres et états de sortie de sa simulation au module 26.
- A une étape 105, par la liaison 28, le module 26 transmet en temps réel ces paramètres et états de sortie au simulateur 30, selon le protocole de communication du prototype. Le simulateur 30, par son module 32, simule alors le calculateur embarqué 10 (projeté mais non encore construit) et, par son module 34, met à jour les données de la trame T des données de diagnostic en attente d'émission sur la liaison 11.
- Lorsque, lors d'une étape 106, l'ordinateur 20 détecte une panne du véhicule, normalement subséquente au défaut D, dans les états de sortie de la simulation, une étape 107 est déclenchée. Tant qu'aucune détection de panne n'a lieu, l'ordinateur 20 relance l'étape 105 par un retour temps réel 1056.
- Lors de l'étape 107, le module 34 simule et calcule la trame T à traiter par le calculateur débarqué 12 et la lui transmet par la liaison 11.
- A une étape 108, grâce à ses logiciels applicatifs LA, le calculateur débarqué 12 élabore un diagnostic à partir de la trame T et le transmet au moniteur 120 qui l'affiche, ou bien à l'imprimante 121, ou encore à l'ordinateur 20, ou même au calculateur 31 s'il est présent, de façon à pouvoir passer à :

- une étape 109 d'analyse des résultats, qui peut être soit manuelle, soit automatique, par exemple être effectuée par le module de comparaison 35 du calculateur 31, lequel :

- soit passe à une étape 110 de validation de méthode de diagnostic du dysfonctionnement D,
- soit passe à une étape 111 de non-validation de méthode de diagnostic et d'analyse des causes de l'erreur de diagnostic.
- Quoi qu'il en soit, le calculateur 31 peut ensuite lors d'une étape 112, par son module 36, relancer automatiquement l'ordinateur 20 sur un test « D' » suivant, en lui cédant le contrôle pour exécuter l'étape 101 après substitution et substitution inverse des fonctions de transfert concernant les défauts D' et D respectivement.

Ainsi, en résumé, disposant d'une modélisation du véhicule, le procédé consiste à :
- Simuler des dysfonctionnements D des organes et les comportements C subséquents du véhicule à partir du modèle virtuel M pour obtenir des données de simulation C(P, D),
- calculer les trames T de données de diagnostic correspondantes,
- entrer les trames T dans le calculateur débarqué 12 et
- comparer les diagnostics du calculateur 12 et plus généralement ses états de sortie (qui peuvent comporter des paramètres complémentaires liés au test) aux dysfonctionnement D introduits pour valider le développement du système du diagnostic 100.

Le calculateur débarqué 12 du système de diagnostic 100 est ici directement testé et validé et n'est pas simulé. Cette forme de réalisation est ici préférée.

Mais dans cette première forme de réalisation de l'équipement, l'outil de test 15 peut-être un premier ordinateur, avec un périphérique d'acquisition 27 et un pilote 34 de communication, l'outil de diagnostic 12 est un deuxième ordinateur comportant les moyens applicatifs de diagnostic LA, et l'interface reliant l'outil de test 15 à l'outil de diagnostic 12 est une interface matérielle 11.

Dans une autre forme de réalisation de l'équipement 100' de la présente demande, les deux outils de test 15 et de diagnostic 12 sont implantés sur un même ordinateur et l'interface 11 est une interface de moyens logiciels reliés aux moyens applicatifs de diagnostic de l'outil de diagnostic.

## Revendications

1. Procédé de développement d'un système (100) de diagnostic du fonctionnement d'un véhicule (2), le système (100) devant comporter une partie (10) embarquée dans le véhicule (2) et une partie (12) en poste fixe, la partie embarquée (10) étant destinée à transmettre des données de diagnostic à la partie fixe (12) au moyen de trames (T) de données de diagnostic, et le fonctionnement nominal et le fonctionnement défaillant (D) du véhicule étant décrits par un modèle virtuel mathématique (M), le procédé étant **caractérisé par le fait que** :
- on modélise (101) le véhicule,
- on simule (103) des dysfonctionnement d'organes du véhicule (2) et les comportements C(P,D) subséquents du véhicule (2) à partir du modèle virtuel (M) pour obtenir des données de simulation,
- on calcule (107) les trames (T) de données de diagnostic à partir des données de simulation,
- on entre les trames de diagnostic (T) dans la partie fixe (12) du système (100) et
- on compare (109) les états de sortie de ladite partie fixe (12) aux dysfonctionnement (D) simulés pour valider le développement.

2. Procédé selon la revendication 1, dans lequel on organise le modèle virtuel mathématique (M) en un ensemble de fonctions de transfert caractéristiques du fonctionnement nominal et des dysfonctionnements (D) des organes du véhicule (2) à diagnostiquer.

3. Procédé selon la revendication 2, dans lequel on simule le fonctionnement dudit véhicule (2) et des dysfonctionnements (D) d'au moins un de ses organes en substituant des fonctions de transfert caractéristiques d'un fonctionnement défaillant à des fonctions de transfert caractéristiques d'un fonctionnement nominal.

4. Equipement (100') de développement d'un système (100) de diagnostic de véhicule (2) pour mettre en oeuvre le procédé selon l'une des revendications 1 à 3, **caractérisé par le fait qu'**il comporte :
- un outil (15) de test informatique sur lequel on modélise le véhicule, comportant le modèle virtuel mathématique (M) du véhicule (2) et la partie embarquée (10) du système (100) de diagnostic, et des moyens (27) d'acquisition de données de dysfonctionnement (D) d'organes du véhicule (2) pour simuler et calculer des trames de données de diagnostic (T),
- un outil de diagnostic informatique (12) comprenant des moyens applicatifs de diagnostic (LA) pour recevoir les trames de données de diagnostic simulées (T),
- une interface (34) de l'outil de test (15) pour la liaison (11) entre les deux outils de test (15) et de diagnostic (12) et pour entrer les trames de données de diagnostic (T) dans les moyens applicatifs (LA) de l'outil de diagnostic (12).

5. Equipement selon la revendication 4, dans lequel l'outil de test (15) est un premier ordinateur, avec un périphérique d'acquisition (27) et un pilote de communication (34), l'outil de diagnostic (12) est un deuxième ordinateur comportant des moyens applicatifs de diagnostic (LA), et l'interface reliant l'outil de test (15) à l'outil de diagnostic (12) est une interface matérielle (11).

6. Equipement selon la revendication 4, dans lequel les deux outils de test (15) et de diagnostic (12) sont implantés sur un même ordinateur et l'interface (11) est une interface de moyens logiciels reliés aux moyens applicatifs de diagnostic (LA) de l'outil de diagnostic (12).
